# EUROPEAN PATENT APPLICATION

(11) **EP 3 313 082 A1**
(43) Date of publication of application: **25.04.2018**
(21) Application number: 16306376.1
(22) Date of filing: 20.10.2016
(51) Int. Cl.: H04N 21/422, H04N 21/436, H04W 4/00, H04W 4/02

(54) **METHOD, SYSTEM AND APPARATUS FOR DETECTING A DEVICE WHICH IS NOT CO-LOCATED WITH A SET OF DEVICES**

(71) Applicant: Thomson Licensing, 92130 Issy-les-Moulineaux (FR)
(72) Inventor: LOUZIR, Ali, 35576 Cesson-Sévigné Cedex (FR); HOWSON, Christopher, 35576 Cesson-Sévigné Cedex (FR); GILBERTON, Philippe, 35576 Cesson-Sévigné Cedex (FR); SACHOT, Jean-Claude, 35576 Cesson-Sévigné Cedex (FR)
(74) Representative: Huchet, Anne

(57) **Abstract**

A method for detecting a current device is not collocated with a set of device is disclosed. A salient idea of the disclosed principles is to measure data representative of a physical environment in relation to a location where the current device is being used. A fingerprint is built from the measured data for being representative for that physical environment. Considering a plurality of devices that are assumed to be collocated, corresponding fingerprints are monitored and a relocation of the current device is detected from a significant deviation of one fingerprint from the other fingerprints. According to different embodiments, the deviation of fingerprints is evaluated between devices at a similar time and / or for devices over time by monitoring the fingerprints evolution over time.

## Description

### 1. TECHNICAL FIELD

The technical field of the disclosed method, system and apparatus is related to sensors, fingerprinting and localization applied to pay television service delivery.

### 2. BACKGROUND ART

Many video consumption services are rendered through the use of hardware devices, such as smart TV sets or set-top boxes, and anti-piracy measures are key to operate the service and sustain its commercial viability. This is the case for example of pay television service providers who want to ensure the set-top boxes that they provide to their customers, are actually being used at the intended customer place and not elsewhere. This is of high importance when the service providers are providing multiple boxes as part of a multi-screen offering, each of them having the capability to access pay television or video content individually. For example, a customer providing one of his multiple devices to a friend who will be using it on his own, represents an unexpected usage of the offering, and a loss of revenue for the service provider.

Some techniques are known for localizing a device, based on for example the Global Positioning System (GPS). However this approach requires the device to include a GPS hardware, which is generally not the case for devices dedicated to exclusive indoor usage. Some other techniques are known for localizing devices leveraging their broadband network connection, when the network is a fixed communication network, such as for example a twisted pair (xDSL) or an optical fiber (FTTH), operated along with an operator-provided broadband gateway, providing point-to-point communication for every customer. With the Internet Protocol now widely used to deliver video content across these point to point distribution networks, customer location can be traced from the public IP address allocated to that customer and the knowledge of the mapping between the public IP addresses and the location of the Internet subscriber. However, some types of video delivery networks such as broadcast television over HFC (Hybrid Coaxial Cable) or others involving wireless distribution means (such as satellite distribution, WiFi or 4G/LTE), do not provide an accurate mapping between an operator-controlled consumer premise network equipment and a particular customer location. In such shared medium distribution networks, where a device, being a part of multiple box offering, may be illegally moved from one reception place to another, there is a need for a method able to accurately detect when a device provided to a customer is used from an unexpected location.

### 3. SUMMARY

A salient idea of the disclosed principles is to measure data representative of a physical environment in relation to a location where a device is being used. A fingerprint is built from the measured data for being representative for that physical environment. Considering a plurality of devices that are assumed to be collocated, corresponding fingerprints are monitored and a relocation of a device is detected from a significant deviation of one fingerprint from the other fingerprints. According to different embodiments, the deviation of fingerprints is evaluated between devices at a similar time and / or for devices over time by monitoring the fingerprints evolution over time.

To that end a method for detecting that a current device is not co-located with a set of devices is disclosed. The method comprises:
- Obtaining a current first fingerprint from current data measured by the current device;
- Obtaining a set of first fingerprints, wherein a first fingerprint is obtained from data measured by a device among the set of devices;
- Obtaining a set of current inter-fingerprint distances, wherein current inter-fingerprint distances are determined between the current first fingerprint and each first fingerprint of the set of first fingerprints;
- In case at least one current inter-fingerprint distance is above a first value, generating a first indication that the current device is not co-located with the set of devices.

According to a particularly advantageous variant, the method further comprises:
- obtaining a set of inter-fingerprint distances between every pair of first fingerprints of the set of first fingerprints;
wherein the first indication is generated in case:
- the at least one current inter-fingerprint distance is above a first value, and
- all inter-fingerprint distances of the set of inter-fingerprint distances are below a second value.

According to a particularly advantageous variant, the current first fingerprint and the first fingerprints of the set of first fingerprints comprise at least one among:
- a pressure value;
- a temperature value;
- a set of magnetic field component values;
- an EDID data;
- a Wi-Fi fingerprint;
- a Bluetooth fingerprint;
- a local network fingerprint;
- a power supply fingerprint.

According to a particularly advantageous variant, each of the current first fingerprint and the first fingerprints of the set of first fingerprints is a pressure value.

According to a particularly advantageous variant, in case the first indication is not generated based on the pressure value, the method for detecting that a current device is not co-located with a set of devices, or the first advantageous variant are repeated with a Wi-Fi fingerprint.

According to a particularly advantageous variant, in case the first indication is not generated based on the Wi-Fi fingerprint, the method for detecting that a current device is not co-located with a set of devices, or the first advantageous variant are repeated with a power supply fingerprint.

According to a particularly advantageous variant, the current first fingerprint is obtained from the current data measured by the current device at a current first time, the method further comprising:
- Obtaining a current second fingerprint from the current data measured by the current device at a current second time;
- Obtaining a current intra-fingerprint distance between the current first fingerprint and the current second fingerprint;
- in case the current intra-fingerprint distance is above a third value, generating a second indication that the current device is not co-located with the set of devices.

According to a particularly advantageous variant, the first fingerprints are obtained from the data measured by each device of the set of devices at a first time, the method further comprising:
- Obtaining a set of second fingerprints, wherein second fingerprints are obtained from the data measured by each device of the set of devices at a second time;
- obtaining a set of intra-fingerprint distances, wherein for each device of the set of devices, an intra-fingerprint distance is obtained between the first fingerprint of the device and the second fingerprint of the device;
wherein the second alarm is generated in case:
- the current intra-fingerprint distance is above a third value; and
- all intra-fingerprint distances of the set of intra-fingerprint distances are below a fourth value.

In a second aspect a server for detecting that a current device is not co-located with a set of devices is also disclosed. The server comprises:
- means for receiving a current first fingerprint from the current device and a set of first fingerprints from the set of devices;
- means for obtaining a set of current inter-fingerprint distances, wherein a current inter-fingerprint distance is obtained between the current first fingerprint and each first fingerprint of the set of first fingerprints;
- means for generating a first indication that the current device is not co-located with the set of devices, in case at least one current inter-fingerprint distance is above a first value.

According to a particularly advantageous variant, the server further comprises means for obtaining a set of inter-fingerprint distances between every pair of first fingerprints of the set of first fingerprints, wherein the first indication is generated in case:
- the at least one current inter-fingerprint distance is above a first value, and
- all inter-fingerprint distances of the set of inter-fingerprint distances are below a second value.

According to a particularly advantageous variant, the current first fingerprint (21) and the first fingerprints of the set (26) of first fingerprints comprise at least one among:
- a pressure value;
- a temperature value;
- a set of magnetic field component values;
- an EDID data;
- a Wi-Fi fingerprint;
- a Bluetooth fingerprint;
- a local network fingerprint;
- a power supply fingerprint.

In a third aspect a server for detecting that a current device is not co-located with a set of devices is also disclosed. The server comprises:
- a network interface adapted to receive a current first fingerprint from the current device and a set of first fingerprints from the set of devices;
- a processor configured to:
   ∘ obtain a set of current inter-fingerprint distances, wherein a current inter-fingerprint distance is obtained between the current first fingerprint and each first fingerprint of the set of first fingerprints;
   o generate a first indication that the current device is not co-located with the set of devices, in case at least one current inter-fingerprint distance is above a first value.

According to a particularly advantageous variant, the processor is configured to obtain a set of inter-fingerprint distances between every pair of first fingerprints of the set of first fingerprints, wherein the processor is further configured to generate the first indication in case the at least one current inter-fingerprint distance is above a first value and all inter-fingerprint distances of the set of inter-fingerprint distances are below a second value.

In a fourth aspect a current device for detecting that the device is not co-located with a set of devices is also disclosed. The current device comprises:
- means for measuring data;
- means for obtaining a current first fingerprint from the measured data;
- means for receiving a set of first fingerprints from the set of devices;
- means for obtaining a set of current inter-fingerprint distances, wherein a current inter-fingerprint distance is obtained between the current first fingerprint and each first fingerprint of the set of first fingerprints;
- means for generating a first indication that the current device is not co-located with the set of devices, in case at least one current inter-fingerprint distance is above a first value.

According to a particularly advantageous variant, the current device further comprises means for obtaining a set of inter-fingerprint distances between every pair of first fingerprints of the set of first fingerprints, wherein the first indication is generated in case the at least one current inter-fingerprint distance is above a first value, and all inter-fingerprint distances of the set of inter-fingerprint distances are below a second value.

In a fifth aspect a current device for detecting that the device is not co-located with a set of devices is also disclosed. The current device comprises:
- at least one sensor configured to measure sensing data;
- a network interface configured to measure network data and to receive a set of first fingerprints from the set of devices;
- a processor configured to:
   ∘ obtain a current first fingerprint from the measured sensing data and the measured network data;
   ∘ obtain a set of current inter-fingerprint distances, wherein a current inter-fingerprint distance is obtained between the current first fingerprint and each first fingerprint of the set of first fingerprints;
   o generate a first indication that the current device is not co-located with the set of devices, in case at least one current inter-fingerprint distance is above a first value.

According to a particularly advantageous variant, the processor is further configured to obtain a set of inter-fingerprint distances between every pair of first fingerprints of the set of first fingerprints, wherein the processor is further configured to generate the first indication in case the at least one current inter-fingerprint distance is above a first value and all inter-fingerprint distances of the set of inter-fingerprint distances are below a second value.

In a sixth aspect, a computer program for detecting that the device is not co-located with a set of devices is also disclosed. The computer program comprises program code instructions executable by at least one processor to perform the disclosed method in any variant.

In a seventh aspect, a computer-readable storage medium is also disclosed. The computer-readable storage medium stores computer-executable program instructions to enable a computer to perform the disclosed method.

In an eighth aspect the disclosed principles are also related to a computer program product comprising instructions of program code for execution by at least one processor to perform the disclosed methods.

While not explicitly described, the present embodiments may be employed in any combination or sub-combination. For example, the present principles are not limited to the described variants, and any arrangement of variants and embodiments can be used. Moreover the present principles are not limited to the described fingerprint computation and similarity/distance evaluation examples. The present principles are not further limited to the described sensors and measured data and are applicable to any kind of data representative of a physical environment in relation to the location where a device is being used. The present principles are not further limited to the described embodiments (server / devices) for computing fingerprints, evaluating the similarity and generating the first and second indications. Any other repartition of the processing between a server and devices is compatible with the disclosed principles.

Besides, any characteristic, variant or embodiment described for the method is compatible with a device intended to process the disclosed method and with a computer-readable storage medium storing program instructions.

### 4. BRIEF DESCRIPTION OF THE DRAWINGS

- **Figures 1a** and **1b** illustrate the method for detecting that a current device is not co-located with a set of devices according to respectively two specific and non-limiting embodiments of the disclosed principles;
- **Figures 2a** and **2b** respectively depict two examples of the method of figures 1 a and 1 b of the disclosed principles;
- **Figure 3** represents a processing device for detecting that a current device is not co-located with a set of devices according to a specific and non-limiting embodiment of the disclosed principles;
- **Figure 4** represents an exemplary architecture of the processing device of figure 3 according to a specific and non-limiting embodiment of the disclosed principles.

### 5. DESCRIPTION OF EMBODIMENTS

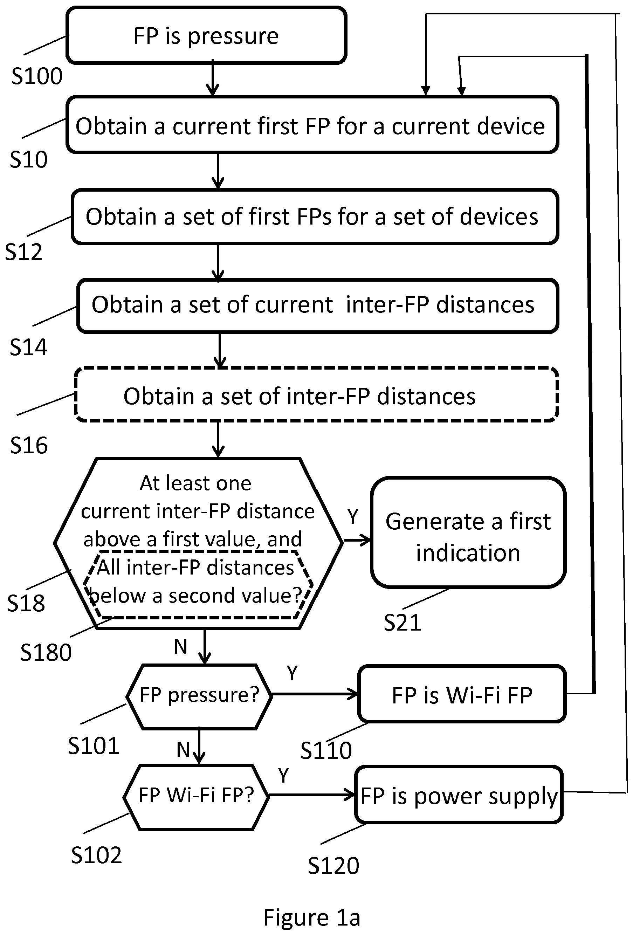

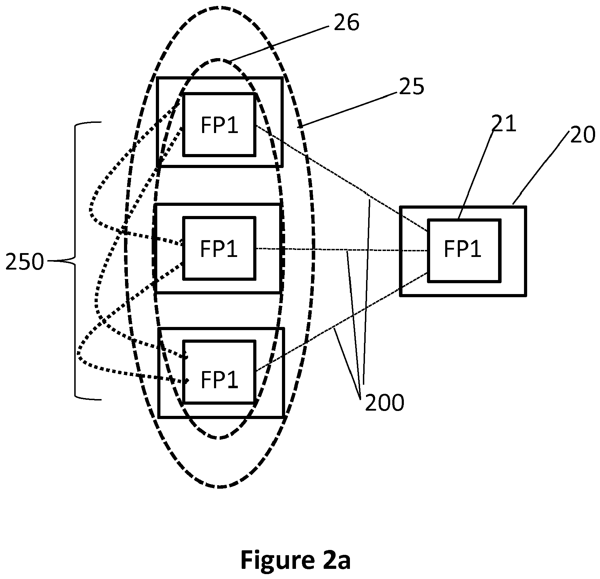

**Figure 1a** and **Figure 2a** depict a method for detecting that a current device 20 is not co-located with a set 25 of devices according to a specific and non-limiting embodiment. The device 20 and the set 25 of devices are for example provided by a pay-tv service provider to a single customer as part of a multi-screen offering. The pay-tv service provider expects that the device 20 and the set 25 of devices are co-located as they are used to access the pay-tv services. The set 25 of devices comprises at least two devices, but the disclosed principles are also applicable in case the set 25 of devices is reduced to a single device. Moreover the disclosed principles are not limited to devices provided by a pay-tv service provider, and are applicable to any situation where co-location is expected between a current device 20 and a set 25 of devices.

### MEASURING DATA

Without limitation and loss of generality a device (being the current device 20 or any device of the set 25 of devices) measures data representative of a physical environment in relation to the location where the device is being used. For example, the data, called sensing data are measured by sensors embedded in the device. According to different variants, these sensors comprise:
- A three-axis magnetometer, reporting at least three values, corresponding to the components of a measured magnetic field. Interestingly, a device changing of location is likely to measure a different magnetic environment;
- A pressure sensor, reporting values that vary with atmospheric pressure. Interestingly a pressure variation for a same atmospheric pressure is a valuable indicator of a change of altitude. For example a difference of 10 meters represents a variation of 1,25 millibar of measured pressure.
- A thermometer reporting temperature values.
- An AC supply voltmeter, measuring instant mains voltage level. Interestingly a power distribution network typically shows voltage variations over time as a result of peak power consumption from the multiple equipment consumers have at home, such as heating or air-conditioning systems, washing machines, hair dryers, TV sets, high power bulbs, etc. Turning on or off these equipment results in voltage variations which can be transitory in nature and are called **interference impulses,** or have longer duration and are called **voltage drops and surges.** More precisely *interference impulses,* result from turning on or off these equipment, and show up only at time of switching on or off the equipment. An *interference impulse* is measured by applying a high pass filter to the mains voltage, thresholding, detecting the polarity and measuring the duration of the peaks of the filtered signal. *Voltage drops and surges,* also result from turning on / off these equipment. A *voltage drop* / surge also has a polarity (either a drop or a surge) and is typically of up to several volts as long as the equipment is in operation. A voltage drop / surge is for example measured by detecting a relative drop or surge of the main power by a factor of for example five percent of the standard power level. Besides the power transitions of other equipment on the same power line, **voltage interruptions** can also be caused by lightning strikes, short circuits, electro-magnetic pulses originating from engine ignition or other sources, etc... A *voltage interruption* is measured by detecting the power level being at a level closed to zero for a period of time. Interestingly co-located devices, sharing a same power distribution network, are likely to observe the same voltage variation events.

In another example data are further measured from the device own built-in hardware resources and comprise information about the network environment of the device including neighboring devices and network components that the device can sense or with which it interacts, providing a unique representation of the local network environment that this device is operating within. These data, called network data and collected for all neighboring devices, comprise:
- Radio Frequency (RF) signal level measurements of received RF channels including their variations over time. Interestingly, co-located devices are likely to observe the same levels of occupancy of the different RF channels.
- Medium Access Control (MAC) address and received signal strength measurements of all detected neighboring Wi-Fi access points. Interestingly in case the device moves, the wireless environment is very likely to change both in terms of the MAC addresses of the neighboring access points and in their corresponding received signal strength. Moreover data should share a good level of similarity as they are measured by co-located devices.
- Medium Access Control (MAC) address of devices detected on a local area network connected to the device. Such data is for example available on the address resolution (ARP) tables of the device, or can be obtained by listening to the network traffic on the local area network. MAC addresses are advantageously measured as being representative of a network environment, rather than IP Addresses because MAC address do not vary for a same connected device along time, while an IP address may be reallocated for a same device. In a variant round trip times (RTT) are also measured for the local area networks, by for example sending an Internet Control Message Protocol (ICMP) ping command. Interestingly in case the device moves, but remains connected to the same local area network, the measured networking data do not vary, but in case the device is relocated to another place and connected to another local area network, the measured networking data are very likely to change especially in terms of the MAC addresses of the connected devices;
- Bluetooth pairing data providing from Bluetooth paired devices with the device. Bluetooth pairing data comprise an identifier of a paired device, such as for example a MAC address of the paired device, a received signal strength corresponding to the paired device. Advantageously, the Bluetooth pairing data include identifiers of previously paired devices, not being paired or not in the range any more of the device, together with a flag indicating that situation. Interestingly the Bluetooth pairing data are representative of the environment of a device. A drastic change of the Bluetooth pairing data over time is likely to be an indication of a device relocation.
- A data structure representative of a video display connected to the device, for example over a High Definition Multimedia Interface (HDMI). This data structure is for example a MAC address of that HDMI connected display device, or any part of an Extended Display Identification Data corresponding to the connected display device. Interestingly, as for the Bluetooth data, the EDID data are representative of the environment of a device. A drastic change of the EDID data over time at least indicates another display device has been connected, which is very likely to happen in case of a device relocation.

### BUILDING A FINGERPRINT

Without limitation and loss of generality a fingerprint obtained by a device (being the current device 20 or any device of the set 25 of devices) designates a vector of items representative of a physical environment in relation to the location where the device is being used. The vector of items is built over time following for example a sampling frequency. Advantageously a time value indicating when the fingerprint has been built is included in the vector.

According to different variants, an item of the vector is one or more numerical values such as for example a pressure value, a temperature value, a magnetic field component value ... According to other variants an item of the vector is one or more strings of characters, such as for example a list of MAC addresses, a part of an EDID ... According to other variants an item of the vector is a pattern of events representing for example successive occurrences of a variety of power level variation events (interference impulse, voltage drop, voltage surge, voltage interruption). Furthermore, an item of the vector is associated with a distance computation function aiming at evaluating the proximity between respective items of different fingerprints.

Without limitation and loss of generality the proximity of items or set of items is evaluated with a distance computation, but other techniques based on similarity coefficients are equally applicable. Although a close proximity between two vectors is deduced from a low distance between the vectors, while a close similarity is deduced from similarity coefficients close to one, the skilled in the art will be able to apply the disclosed principles described via distances, by also using similarity coefficients computation.

According to a specific and non-limiting embodiment, a fingerprint comprises a plurality of sub-fingerprints, wherein a sub-fingerprint comprises items of similar type (i.e. numerical values, strings of characters ...), associated with a single distance computation function (for example Euclidean distance for numerical values). According to this specific and non-limiting embodiment, for evaluating a distance between two such fingerprints, each one comprising a plurality of sub-fingerprints, a sub-distance is for example computed for each pair of sub-fingerprints between the fingerprints, and the distance between the fingerprints is obtained by for example adding the sub-distances. Any other mathematical operation (average, quadratic sum, weighted sum ...) applied to sub-distances of the sub-fingerprints for obtaining the distance between the fingerprints is compatible with the disclosed principles.

As mentioned above, a fingerprint is built over time following a sampling frequency. According to a first variant, a single sampling frequency is used and a single time value is included in the fingerprint. According to another variant, several different sampling frequencies are used for several different items or sub-fingerprints, and several time values are included in the fingerprint, wherein a time value is associated with an item or a set of item of the fingerprint.

### Wi-Fi FINGERPRINT

A Wi-Fi fingerprint, also called a Wi-Fi sub-fingerprint in case it is a part of a more global fingerprint, aggregates the data representative of the Wi-Fi environment of the location where the device, measuring the data, is used. In a first variant the device scans a set a RF channels dedicated to Wi-Fi (in the 2.4 GHz and/or the 5GHz bands), logs a received signal strength for each of the channels, resulting in a vector of values, one for each RF channel. While generating the vector of received signal strength values, each device orders the received signal strength values in a same order (for example by increasing values of the RF channel numbers) so that distances can be computed. A numerical distance function such as for example the Euclidean distance is used to compute the distance between two such Wi-Fi sub-fingerprints. Any other numerical distance function is compatible with this first variant of the disclosed principles.

In a second variant the Wi-Fi sub-fingerprint comprises a list of MAC addresses of neighboring access points in the range of the device. More precisely, for being part of that list a signal must be received from a neighboring access point with a signal strength above a threshold, for example minus 90dBm, but any other threshold value is compatible with the disclosed principles. In that first variant, the Wi-Fi sub-fingerprint is a string of characters, being for example a comma separated list of MAC addresses. The distance computation function associated with that comma separated list of MAC addresses is any function quantifying how dissimilar two strings are. For example the edit distance counting the minimum number of operations required to transform one string into the other is used to compute a distance between the two sub-fingerprints. In another example, the Hamming distance is used to evaluate the distance between two strings of equal length by computing a number of positions at which the corresponding symbols are different. The Hamming distance in that case is preceded by a preliminary step of ordering the MAC addresses according to a same criteria (numeric or alphabetic), and padding the strings to a same length. More generally any distance computation function allowing to evaluate the similarity between two strings of characters representing neighboring access points detected in the range, are compatible with the disclosed principles.

In a third variant the Wi-Fi sub-fingerprint comprises a list of tuples representing neighboring access points detected in the range of the device. Each tuple of that list comprises a MAC address representing a neighboring access point, and a numerical value being a received signal strength measured by the device from data received by the neighboring access point. Computing a distance between such two sub-fingerprints based on lists of tuples comprises a first step of ordering both lists according to a same criteria on the MAC addresses, and a second step of creating two vectors of values, one vector for each tuple based sub-fingerprint, wherein each value of a vector is the value of the corresponding tuple in the ordered list of tuples. Moreover both vectors are aligned to a same size: in case one neighboring access point was detected by a device and not by the other, a very low value, for example of -110dBm is added in the vector corresponding to the other device for taking the undetected access point into account. The distance between both numerical vectors aligned to a same size is then computed based on a numerical distance computation function, for example based on a Euclidean distance. Any combination between any of the first, second and/or third variants are compatible with the disclosed principles to obtain Wi-Fi sub-fingerprints and evaluate their proximity.

### Bluetooth FINGERPRINT

In a relatively similar way to Wi-Fi sub-fingerprints, a Bluetooth fingerprint also called a Bluetooth sub-fingerprint in case it is a part of a more global fingerprint, aggregates the data representative of the Bluetooth environment of the location where the device, measuring the data, is used. In a first variant, similar to the Wi-Fi sub-fingerprint first variant the device scans a set a RF channels dedicated to Bluetooth.

In a second variant the Bluetooth sub-fingerprint comprises a list of MAC addresses or device identifiers of paired Bluetooth devices. The method described for the second variant of the Wi-Fi sub-fingerprint is applicable to that second variant as well.

In a third variant the Bluetooth sub-fingerprint comprises a list of MAC addresses or device identifiers devices being previously paired with the device over Bluetooth, but that are not paired with it anymore. The method described for the second variant of the Wi-Fi sub-fingerprint is applicable to that second variant as well.

In yet another variant the Bluetooth sub-fingerprint comprises a list of tuples representing paired device identifiers and measured received signal strength, wherein the method described for the third variant of the Wi-Fi sub-fingerprint is also applicable. Any combination between any of the Bluetooth variants are compatible with the disclosed principles to obtain Bluetooth sub-fingerprints and evaluate their similarity.

### LOCAL NETWORK FINGERPRINT

In a relatively similar way to Wi-Fi and Bluetooth sub-fingerprints, a local network fingerprint also called a network sub-fingerprint in case it is a part of a more global fingerprint, aggregates the data representative of the network environment of the location where the device, measuring the data, is used. In a first variant, similar to the Wi-Fi sub-fingerprint second variant, the device connected to a home network builds a list of MAC addresses of devices connected to the same local area network. The method described for the second variant of the Wi-Fi sub-fingerprint is applicable to that first variant as well.

In another variant, similar to the Wi-Fi sub-fingerprint third variant, based on list of tuples, the device being connected to a home network, builds a list of tuples representing neighboring devices connected to the same local network as the device. Each tuple of that list comprises a MAC address representing a neighboring connected device, and a numerical value being a RTT measured between the device and the connected device.

### POWER SUPPLY FINGERPRINT

A power supply fingerprint, also called a power supply sub-fingerprint in case it is a part of a more global fingerprint, aggregates the data representative of the power supply environment of the location where the device, measuring the data, is used. Without limitation, the data representative of the power supply environment of the location comprise *interference impulse event* data, *voltage surge event* data, *voltage drop event* data, and *voltage interruption event* data, as previously described. According to different variants, the amplitude, polarity, duration and recurrence of these events are measured by a device over a period of time and aggregated in a power supply sub-fingerprint for that device and that period of time, the power supply sub-fingerprint being representative of the device location during that period of time. A distance or a similarity between two power supply sub-fingerprints is estimated from a correlation analysis of the sub-fingerprints, for example by computing the Pearson product-moment correlation coefficient. Any other technique for estimating a similarity or a distance between two power supply sub-fingerprints is compatible with the disclosed principles.

In a first variant the power supply sub-fingerprint comprises a pattern of interference impulse events over a period of time. An interference impulse event comprises for example a time of occurrence, a polarity (positive or negative) and a duration.

In a second variant the power supply sub-fingerprint comprises a pattern of voltage drop and surge events over a period of time. A voltage drop event comprises for example a time of occurrence and a duration. Similarly a voltage surge event also comprises for example a time of occurrence and a duration.

In a third variant the power supply sub-fingerprint comprises a pattern of voltage interruption events over a period of time. A voltage interruption event comprises for example a time of occurrence and a duration.

Any combination between any of the first, second and/or third variants are compatible with the disclosed principles to obtain power supply sub-fingerprints and evaluate their proximity.

### FIST EMBODIMENT - BETWEEN (INTER) DEVICES

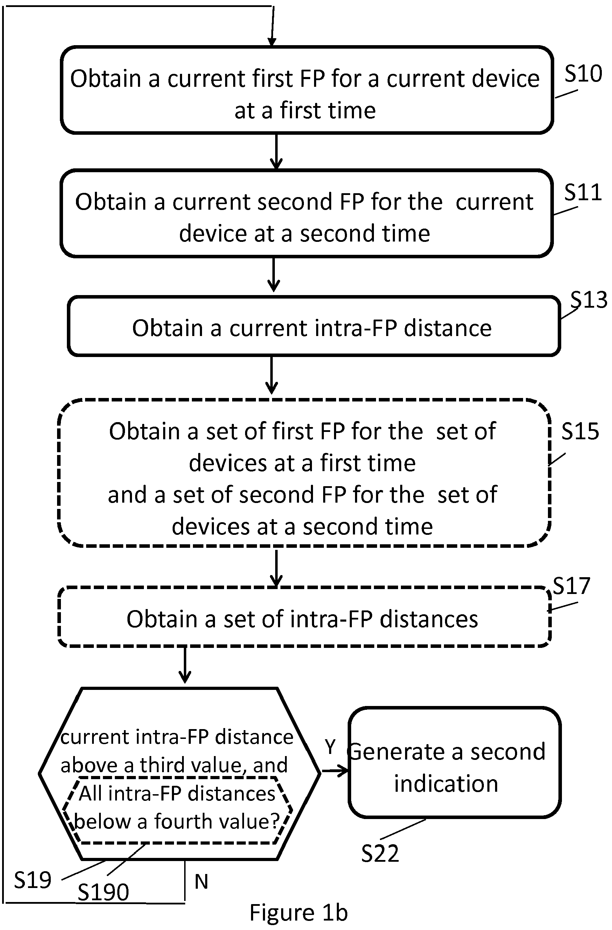

Back to figures 1 a and 2a, in the step S100, the method is initialized by starting with a fingerprint instantiated to a pressure value. A fingerprint is therefore a single numerical value representing a pressure, for example the atmospheric pressure, being measured by a sensor embedded in a device (being the current device 20 or any device of the set 25 of devices).

In the step S10, a current first fingerprint 21, also represented as "FP1" in figure 2a, is obtained from current data measured by the current device 20, and representative of the environment of the current device 20. In case the step S10 just follows the initialization step S100, the current first fingerprint 21 and the current data are a pressure value which is the atmospheric pressure measured by the current device 20 over time.

In the step S12, a set 26 of first fingerprints, also represented as "FP1" in figure 2a, is obtained, wherein a first fingerprint is obtained from data measured by a device among the set 25 of devices, and representative of the environment of the device. In case the fingerprint is instantiated as a pressure value, the first fingerprints and the data are also pressure values being the atmospheric pressure measured by the devices of the set 25 of devices over time.

In the step S14 a set 200 of current inter-fingerprint distances, wherein current inter-fingerprint distances are determined between the current first fingerprint 21 and each first fingerprint of the set 26 of first fingerprints. The current inter-fingerprint distances allow to evaluate the similarity of the environment between the current device 20 and the devices of the set 25 of devices. In case the fingerprint is instantiated to a pressure value, the current inter-fingerprint distances capture the difference of measured atmospheric pressure by the current device 20 and the devices of the set 25 of devices. Advantageously, fingerprint time values, indicating when the current first fingerprint 21 and the first fingerprints have been built is also taken into account in evaluating the proximity between the current first fingerprint 21 and the first fingerprints. For example before computing a current inter-fingerprint distance between the current first fingerprint and one of the first fingerprints, both fingerprint time values are evaluated and the current inter-fingerprint distance is computed in case a difference between both fingerprint time values is within a given range. In case the fingerprint is instantiated to a pressure value, the range is for example one day. Otherwise, in case the difference between both fingerprint time values is outside the given range, indicating they may not be representative of a same instantaneous environment, the current inter-fingerprint distance is not computed and for example an error is raised in the method. The range value for evaluating the fingerprint times depends on the fingerprint sampling frequency, i.e. at which frequency the fingerprints are built.

In the step S18, all the current inter-fingerprint distances are evaluated against a first value. If at least one current inter-fingerprint distance is above the first value, this indicates the current first fingerprint 21 is significantly different from at least one first fingerprint of a device, and a first indication that the current device 20 is not co-located with the set 25 of devices is generated in the step S21. In a variant the first indication is generated in the step S21 in case all the current inter-fingerprint distances are above the first value. In yet another variant the first indication is generated in the step S21 in case an average of the current inter-fingerprint distances is above the first value. In any of the above variants, in case the fingerprint is instantiated as a pressure value, pressure values are measured by different pressure sensors, measuring a same physical phenomena, being the atmospheric pressure. A pressure sensor measures the atmospheric pressure within a known error margin being part of the technical characteristics of the pressure sensor. This error margin is known by the pay-tv service provider, providing the current device 20 and the set 25 of devices. Advantageously the error margins of the sensors of the current device 20 and the devices of the set 25 of devices, are taken into account for setting the first value to a value significantly larger than for example the maximum error margin of the sensors.

In the optional sub-step S180 of the step S18, the inter-fingerprint distances are further evaluated against a second value. The first indication is generated in the step S21 in case a current inter-fingerprint distance is above the first value in any of the variants, and in case all the inter-fingerprint distances of the set 250 of inter-fingerprint distances are below the second value. Adding the optional evaluation of the sub-step S180 is advantageous as it allows checking the first fingerprints of the set 25 of first fingerprints are sufficiently similar, indicating the first fingerprints are representative of a common physical environment of co-located devices. A scenario where for example a current inter-fingerprint distance is above the first value and at least one inter-fingerprint distance is above the second value, may represent a situation where the set 25 of devices does not comprise only co-located device. It may also represent a situation where the current first fingerprint and/or one of the first fingerprints are not sufficiently accurately representing the physical environment of the devices.

In the step S101, in case a current inter-fingerprint distance is below the first value in any of the variants, and in case the current first fingerprint 21 and the first fingerprints are based on a pressure value, the current first fingerprint 21 and the first fingerprints are further instantiated to a Wi-Fi fingerprint in any of the described variants in the step S110, and the steps S10, S12, S14, optional S16, and S18 are repeated with a Wi-Fi fingerprint applied to Wi-Fi measured data in any of the described variants.

In the step S102, in case a current inter-fingerprint distance is below the first value in any of the variants, and in case the current first fingerprint 21 and the first fingerprints are based on a Wi-Fi fingerprint, the current first fingerprint 21 and the first fingerprints are further instantiated to a power supply fingerprint in any of its variant in the step S120 and the steps S10, S12, S14, optional S16, and S18 are repeated with a power supply fingerprint applied to data measured from the power supply distribution network in any of the described variants.

In dense urban areas, a physical proximity of devices, for instance within a twenty feet radius, does not necessarily imply the devices belong to / are used by a single subscriber. The disclosed principles, by iterating the steps S10 to S18 in the described order are advantageous as they allow to progressively increase the resolution and the processing complexity: starting with a pressure value represents a pretty low complexity processing and allows to detect a current device 20 not being at a same altitude as a set 25 of devices. Then in case of no such detection, iterate again with a Wi-Fi fingerprint represents a more complex processing for building and evaluating the fingerprints, but allowing to detect a current device 20 not being in a same building as a set 25 of devices. And in case of no such detection again, iterate with a power supply fingerprint represents an even more complex processing for building and evaluating the fingerprints, but allowing to detect a current device 20 not being in a same apartment as a set 25 of devices.

### SECOND EMBODIMENT - OVER TIME

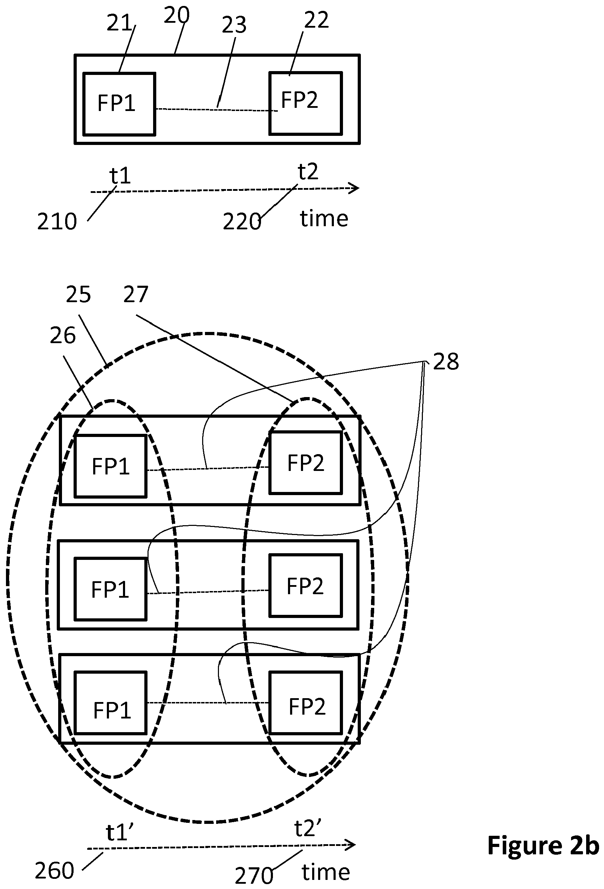

Back to figures 1b and 2b, in the step S10, a current first fingerprint 21, also represented as "FP1" in figure 2b, is obtained from current data measured, in any of the described variants, by the current device 20 at a current first time 210 represented as t1 over a time line of the figure 2b. The current first fingerprint 21 in any of the described variants is representative of the physical environment of the current device 20 at the current first time 210.

In the step S11 a current second fingerprint 22, also represented as "FP2" in figure 2b, is obtained from current data measured, in any of the described variants by the current device 20 at a current second time 220 represented as t2 over the time line of the figure 2b. The current second fingerprint 22 in any of the described variants, but in a same variant as the current first fingerprint 21 of the step S10, is representative of the physical environment of the current device 20 at the current second time 220.

In the step S13, a current intra-fingerprint distance 23 is computed between the current first fingerprint 21 and the current second fingerprint 22. The current intra-fingerprint distance 23 is representative of a variation in the physical environment of the device 20 between the first time 210 and the second time 220. This variation may be due to changes in the physical environment itself, such as for example a temperature change due to changing weather conditions, a pressure change due to changing atmospheric pressure changes... But this variation may also be due to a relocation of the current device 20 into another location, with a different physical environment. For instance in case of a significant variation between the current first fingerprint and the current second fingerprint, the current device 20 is likely to have been moved between the first 210 and the second 220 time.

In the step S19, and according to a specific embodiment, in case the current intra-fingerprint distance 23 is above a third value, a second indication that the current device 20 is not co-located with the set 25 of devices is generated in the step S22. In case the current intra-fingerprint distance 23 is not the third value, no second indication is generated and the method is further iterated at step S10. According to different variants, the first and the second indications are different indications indicating different sources of changes (between devices or over time), or are merged into a single indication that the current device 20 is suspected of relocation. In this specific embodiment only the current intra-fingerprint distance 23 is evaluated against the third value to generate the second indication. The third value has to be relatively high so as to not generate the second indication in case of a change of the physical environment of the current device 20, occurring without any relocation of the current device 20.

According to a another specific embodiment, the evolution of the fingerprints of the set 25 of devices is also taken into account so as detect the current device 20 is not co-located with the set 25 of devices. In the optional step S15, a set 26 of first fingerprints, also represented as "FP1" in figure 2b, is obtained, wherein a first fingerprint is obtained from data measured, in any of the described variants by a device among the set 25 of devices at a first time 260 represented as t1' over a time line in the figure 2b. The first fingerprints in any of the variants described above, but all being of a same variant, are representative of the physical environment of the devices of the set 25 of devices at the first time 260.

A set 27 of second fingerprints, also represented as "FP2" in figure 2b, is further obtained, wherein a second fingerprint is obtained from data measured by a device among the set 25 of devices at a second time 270 represented as t2' over a time line in the figure 2b. The second fingerprints in any of the variants described above, but all being of a same variant, are representative of the physical environment of the devices of the set 25 of devices at the second time 270.

For the sake of clarity all the devices of the set 25 of devices are described as obtaining their first fingerprints at the same first time 260 (and their second fingerprints at the same second time 270), but they do not have to. No time synchronization is required between the devices of the set 25 of devices. Each device of the set 25 of device may obtain its first fingerprint at a slightly different time value of the other devices, (and obtain its second fingerprint at a slightly different time value of the other devices) without compromising the whole method. As described above, a fingerprint time value is advantageously included in the fingerprint and evaluated as part of the fingerprint proximity evaluation.

In the optional step S17 a set 28 of intra-fingerprint distances is obtained, wherein for each device of the set 25 of devices, an intra-fingerprint distance is obtained between the first fingerprint of the device and the second fingerprint of the device.

In the optional sub-step S190 of the step S19, the intra-fingerprint distances are further evaluated against a fourth value. The second indication, in any of the described variants, is generated in the step S22 in case a current intra-fingerprint distance is above the third value in any of the variants and all intra-fingerprint distances of the set 28 of intra-fingerprint distances are below a fourth value.

Adding the optional evaluation of the sub-step S190 is advantageous as it allows checking the first fingerprints and the second fingerprints are respectively sufficiently similar, indicating the first and second fingerprints are representative of a common and stable physical environment of co-located devices. A scenario where for example a current intra-fingerprint distance is above the third value and at least one intra-fingerprint distance is above the fourth value, may represent a situation where the set 25 of devices does not comprise only co-located devices. It may also represent a situation where the physical environment for the current device 20 as well as the devices of the set 25 of devices changed in a similar way, indicating that the current device 20 is still co-located with the set 25 of device, despite a detection of a variation in time of its own physical environment.

According to a specific and non-limiting embodiment, the current device 20 measures the current data, builds a current first (and/or second) fingerprint and sends the current first (and/or second) fingerprint to an external server over a communication network. Similarly, each device of the set 25 of devices builds a first (and/or second) fingerprint and sends the first (and/or second) fingerprint to the external server over the communication network. The external server is advantageously operated or at least under the control of the pay-tv service provider. The external server, receiving the current first (and/or second) fingerprint and the first (and/or second) fingerprints, computes a set 200 of current inter-fingerprint distances, a set 250 on inter-fingerprint distances, and/or a current intra fingerprint distance 23 and/or a set 28 of intra-fingerprint distances. The external server further generates a first and/or a second indication that the current device 20 is not co-located with the set 25 of devices according to the method described in figures 1 a and/or 1 b. The service provider then advantageously leverages this detection by for example taking anti-piracy measures against the current device 20. Anti-piracy measures for instance comprise displaying an indication on a display device connected to the current device 20 that the current device 20 is suspected of relocation. Another anti-piracy measures comprises denying credentials for receiving and decoding the pay-tv services.

According to another specific and non-limiting embodiment, the current device 20 and each device of the set 25 of devices respectively build a current first (and/or second) and a first (and/or second) fingerprint in a similar way as the previously described embodiment. According to this specific and non-limiting embodiment, the current device 20 receives the set of first (and/or second) fingerprints from the devices of the set 25 of devices over a communication network. This advantageous embodiment allows for example to relax the constraint for the pay-tv service provider to operate an external server. According to this specific and non-limiting embodiment, the current device 20 computes a set 200 of current inter-fingerprint distances, and/or a set 250 on inter-fingerprint distances, and/or a current intra fingerprint distance 23 and/or a set 28 of intra-fingerprint distances. The current device 20 further generates a first and/or a second indication that the current device 20 is not co-located with the set 25 of devices according to the method described in figures 1 a and/or 1 b. According to a first variant, the first and/or a second indication is displayed on a display device being part of or connected to the current device. According to another variant, the first and/or a second indication is further sent to another device, for example an external server over a communication network for further processing.

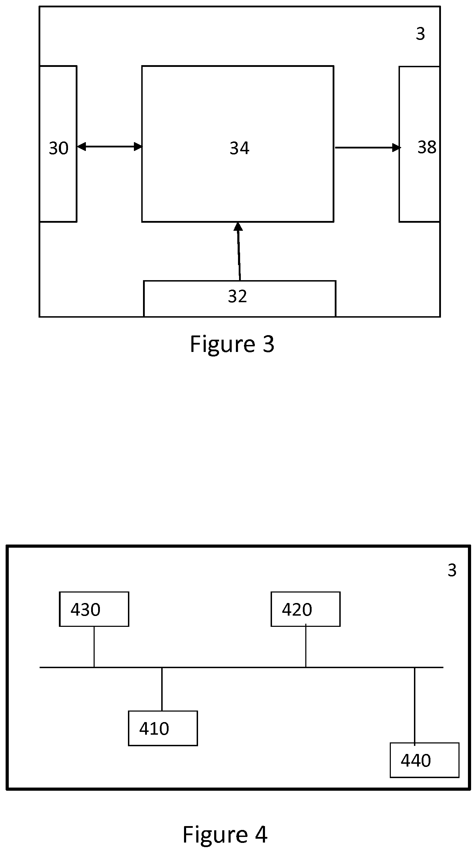

**Figure 3** depicts a processing device 3 for detecting that a current device is not co-located with a set of devices. According to a specific and non-limitative embodiment the processing device 3 is the current device. According to another specific and non-limitative embodiment the processing device 3 is a processing device different from the current device.

According to a specific and non-limitative embodiment, the processing device 3 comprises a network interface 30 configured to send and receive data to and from a communication network. The network interface 30 is further configured to measure data from the network environment of the processing device 3. According to different embodiments of the disclosed principles, the network interface belongs to a set comprising:
- A Wi-Fi wireless local area network interface in any of its variant;
- A Bluetooth network interface in any of its variant;
- A wired local area network interface such as for example Ethernet, an IEEE 802.3 network, or any network interface compatible with the IEEE group of standards, a Multimedia over Coax Alliance (MoCA) interface, a power line interface in any of variant etc;
- A broadband network interface, comprising a wide area network interface such as xDSL, GPON, WiMAX.

More generally any network interface allowing to send and receive data over a communication network is compatible with the disclosed principles.

According to a specific and non-limitative embodiment, the processing device 3 also comprises a set of sensors 32 to measure data from the environment and representative of the physical environment of the processing device 3. According to different embodiments, the sensors belong to a set comprising:
- a thermometer for measuring the temperature in the environment of the device;
- A three-axis magnetometer, configured to measure and report at least three values, corresponding to the components of a measured magnetic field;
- A pressure sensor configured to measure and report the atmospheric pressure value;
- An AC power supply voltmeter together with filtering and sampling logic to measure and report voltage variations over time as described in the disclosed principles.

More generally any type of sensor allowing to measure data representative of the physical environment of the processing device 3 is compatible with the disclosed principles.

The network interface 30 and the sensors 32 are linked to a processing module 34 configured to detect that a current device is not co-located with a set of devices. According to a specific and non-limiting embodiment, the processing module 34 is configured to obtain a current first fingerprint from current data measured by the sensors 32 and/or the network interface 30. According to another specific and non-limiting embodiment, the processing module 34 is configured to receive a current first fingerprint from the network interface 30, wherein the current first fingerprint is obtained from current data measured by the current device, being a different device of the processing device 3. The processing module 34 is further configured to obtain a set of first fingerprints, wherein a first fingerprint is obtained from data measured by a device among the set of devices. In a first variant the processing module 34 receives data measured by the device from the network interface 30 and determines the first fingerprint according to any variant previously described. In another variant, the processing module 34 receives the first fingerprint from the network interface 30, the first fingerprint being determined by the device according to any variant previously described. The processing module is further configured to obtain a set of current inter-fingerprint distances, wherein current inter-fingerprint distances are determined between the current first fingerprint and each first fingerprint of the set of first fingerprints. In case at least one current inter-fingerprint distance is above a first value, the processing module 34 is further configured to generate a first indication that the current device is not co-located with the set of devices.

The first indication is sent to an output 38 such as a display mean. According to a particular embodiment the display mean is external to the device and the output 18 sends the first indication to an external display mean. According to different embodiments of the principle, the display mean, internal or external, belongs to a set comprising:
- a personal computer screen;
- a TV screen;
- a tablet;
- a smartphone screen.

More generally any display mean allowing to display a first indication that the current device is not co-located with the set of devices is compatible with the disclosed principles.

**Figure 4** represents an exemplary architecture of the processing device 3 according to a specific and non-limitative embodiment, where the processing device 1 is configured to detect that a current device is not co-located with a set of devices. The processing device 3 comprises one or more processor(s) 410, which is(are), for example, a CPU, a GPU and/or a DSP (English acronym of Digital Signal Processor), along with internal memory 420 (e.g. RAM, ROM, EPROM). The processing device 3 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 3.

According to an exemplary and non-limitative embodiment, the processing device 3 further comprises a computer program stored in the memory 420. The computer program comprises instructions which, when executed by the processing device 3, in particular by the processor 410, make the processing device 3 carry out the processing method described with reference to figures 1 a and 1 b. According to a variant, the computer program is stored externally to the processing device 3 on a non-transitory digital data support, e.g. on an external storage medium such as a SD Card, HDD, CD-ROM, DVD, a read-only and/or DVD drive and/or a DVD Read/Write drive, all known in the art. The processing device 3 thus comprises an interface to read the computer program. Further, the processing device 3 could access one or more Universal Serial Bus (USB)-type storage devices (e.g., "memory sticks.") through corresponding USB ports (not shown).

According to exemplary and non-limitative embodiments, the processing device 3 is a device, which belongs to a set comprising:
- a set top box device;
- a TV device;
- a digital media player device;
- an Internet gateway device;
- a mobile device ;
- a communication device ;
- a game device ;
- a tablet (or tablet computer) ;
- a smartphone;
- a laptop;
- a server;
- a cloud computing instance.

## Claims

1. A method for detecting that a current device (20) is not co-located with a set (25) of devices, the method comprising:
- Obtaining (S10) a current first fingerprint (21) from current data measured by the current device (20);
- Obtaining (S12) a set (26) of first fingerprints, wherein a first fingerprint is obtained from data measured by a device among the set (25) of devices;
- Obtaining (S14) a set (200) of current inter-fingerprint distances, wherein current inter-fingerprint distances are determined between the current first fingerprint (21) and each first fingerprint of the set (26) of first fingerprints;
- In case at least one current inter-fingerprint distance is above a first value, generating (S21) a first indication that the current device (20) is not co-located with the set (25) of devices.

2. The method according to claim 1, further comprising
- obtaining a set (250) of inter-fingerprint distances between every pair of first fingerprints of the set of first fingerprints;
wherein the first indication is generated in case:
- the at least one current inter-fingerprint distance is above a first value, and
- all inter-fingerprint distances of the set (250) of inter-fingerprint distances are below a second value.

3. The method according to any of claims 1 to 2, wherein the current first fingerprint (21) and the first fingerprints of the set (26) of first fingerprints comprise at least one among:
- a pressure value;
- a temperature value;
- a set of magnetic field component values;
- an EDID data;
- a Wi-Fi fingerprint;
- a Bluetooth fingerprint;
- a local network fingerprint;
- a power supply fingerprint.

4. The method according to any of claims 1 to 2, wherein each of the current first fingerprint (21) and the first fingerprints of the set (26) of first fingerprints is a pressure value.

5. The method according to claim 4, wherein in case the first indication is not generated based on the pressure value, repeating the method of claims 1 or 2 with a Wi-Fi fingerprint.

6. The method according to claim 5, wherein in case the first indication is further not generated based on the Wi-Fi fingerprint, repeating the method of claim 1 or 2 with a power supply fingerprint.

7. The method according to any of claims 1 to 6, wherein the current first fingerprint (21) is obtained from the current data measured by the current device (20) at a current first time (210), the method further comprising:
- Obtaining (S11) a current second fingerprint (22) from the current data measured by the current device (20) at a current second time (220);
- Obtaining (S13) a current intra-fingerprint distance (23) between the current first fingerprint (21) and the current second fingerprint (22);
- in case the current intra-fingerprint distance (23) is above a third value, generating (S22) a second indication that the current device (20) is not co-located with the set (25) of devices;

8. The method according to claim 6, wherein the first fingerprints are obtained from the data measured by each device of the set (25) of devices at a first time (260), the method further comprising:
- Obtaining (S15) a set (28) of second fingerprints, wherein second fingerprints are obtained from the data measured by each device of the set (25) of devices at a second time (270);
- obtaining (S17) a set (28) of intra-fingerprint distances, wherein for each device of the set (25) of devices, an intra-fingerprint distance is obtained between the first fingerprint of the device and the second fingerprint of the device;
wherein the second alarm is generated in case:
- the current intra-fingerprint distance (23) is above a third value; and
- all intra-fingerprint distances of the set (28) of intra-fingerprint distances are below a fourth value.

9. A server (3) for detecting that a current device (20) is not co-located with a set (25) of devices, the server (3) comprising:
- means (30) for receiving a current first fingerprint (21) from the current device (20) and a set (26) of first fingerprints from the set (25) of devices;
- means (34) for obtaining a set (200) of current inter-fingerprint distances, wherein a current inter-fingerprint distance is obtained between the current first fingerprint (21) and each first fingerprint of the set (26) of first fingerprints;
- means (38) for generating a first indication that the current device (20) is not co-located with the set (25) of devices, in case at least one current inter-fingerprint distance is above a first value.

10. The server (3) according to claim 9, wherein said means (34) for obtaining a set (200) of current inter-fingerprint distances further comprise means for obtaining a set (250) of inter-fingerprint distances between every pair of first fingerprints of the set of first fingerprints, wherein the first indication is generated in case:
- the at least one current inter-fingerprint distance is above a first value, and
- all inter-fingerprint distances of the set (250) of inter-fingerprint distances are below a second value.

11. The server (3) according to any of claims 9 to 10, wherein the current first fingerprint (21) and the first fingerprints of the set (26) of first fingerprints comprise at least one among:
- a pressure value;
- a temperature value;
- a set of magnetic field component values;
- an EDID data;
- a Wi-Fi fingerprint;
- a Bluetooth fingerprint;
- a local network fingerprint;
- a power supply fingerprint.

12. A current device (20, 3) adapted to detect the current device (20, 3) is not co-located with a set (25) of devices, the method comprising:
- means (30, 32) for measuring data;
- means (34) for obtaining a current first fingerprint (21) from the measured data;
- means (30) for receiving a set (26) of first fingerprints from the set (25) of devices;
- means (34) for obtaining a set (200) of current inter-fingerprint distances, wherein a current inter-fingerprint distance is obtained between the current first fingerprint (21) and each first fingerprint of the set (26) of first fingerprints;
- means (38) for generating a first indication that the current device (20) is not co-located with the set (25) of devices, in case at least one current inter-fingerprint distance is above a first value.

13. The current device (20, 3) according to claim 12, wherein said means (34) for obtaining a set (200) of current inter-fingerprint distances further comprise means for obtaining a set (250) of inter-fingerprint distances between every pair of first fingerprints of the set of first fingerprints, wherein the first indication is generated in case:
- the at least one current inter-fingerprint distance is above a first value, and
- all inter-fingerprint distances of the set (250) of inter-fingerprint distances are below a second value.

14. The current device (20, 3) according to any of claims 12 to 13, wherein the current first fingerprint (21) and the first fingerprints of the set (26) of first fingerprints comprise at least one among:
- a pressure value;
- a temperature value;
- a set of magnetic field component values;
- an EDID data;
- a Wi-Fi fingerprint;
- a Bluetooth fingerprint;
- a local network fingerprint;
- a power supply fingerprint.

15. A computer program product for detecting that a current device (20) is not co-located with a set (25) of devices, the computer program product comprising program code instructions executable by a processor for performing the method according to any of claims 1 to 8.
